Europäisches Patentamt

European Patent Office

Office européen des brevets

(19)

(11) Publication number: **0 048 178**

**A2**

(12) **EUROPEAN PATENT APPLICATION**

(21) Application number: **81304264.5**

(22) Date of filing: **16.09.81**

(51) Int. Cl.³: **G 01 M 1/22**

(30) Priority: **16.09.80 AU 5595/80**

(43) Date of publication of application:
**24.03.82 Bulletin 82/12**

(84) Designated Contracting States:
**DE GB IT**

(71) Applicant: **REPCO LIMITED
630, St. Kilda Road
Melbourne 3004 Victoria(AU)**

(72) Inventor: **Aubert, Richard William
24 Heather Grove Belgrave South
Victoria, 3160(AU)**

(74) Representative: **Palmer, Roger et al,
Page, White and Farrer 27 Chancery Lane
London WC2A 1NT(GB)**

(54) Data acquisition for a balancing machine.

(57) A method of processing uncorrected data signals in a balancing machine characterised in that it includes the steps of charging an integrating capacitor (C) with a directionally switched current signal proportional to the combined instantaneous data signal and unwanted signal parameters, over an acquisition period comprising a predetermined angular displacement of a workpiece (SP), discharging said capacitor (C) at the end of said acquisition period by using a fixed reference current, and measuring the duration of said discharge to produce a representative data signal. An apparatus for performing the method is also described and claimed.

$\overline{III}.\ 1\ .$

Croydon Printing Company Ltd.

**0048178**

## Data acquisition for a balancing machine

This invention relates to data acquisition for a balancing machine such as a dynamic wheel balancing machine, and particularly relates to a method and apparatus for processing data signals to remove unwanted elements of the signals.

It is common to use microprocessors or similar digital apparatus to evaluate signals derived from transducers on a balancing machine, in which a workpiece is rotated to determine the amount and position of weights necessary to correct any unbalance which may be present.

The interface between the transducers and the processor generally takes the form of an analogue to digital converter, in which instantaneous analogue signal values are converted at suitable time intervals into digital data. These time intervals are determined by information derived from a rotary encoder or encoders which run(s) synchronously with the machine shaft and hence the workpiece.

In such a system, the processor uses software means to analyse the transducer signal in relation to the rotation of the shaft. This analysis covers two aspects, the separation of the signal from background noise, and the evaluation of the signal in relation to the rotation of the shaft. Various algorithms may be used to effect this analysis; commonly both are achieved simultaneously without difficulty when the signal to noise ratio is high.

However, if the relative amount of noise is high, as is the situation in a low-speed machine, this system of data acquisition becomes unsatisfactory and costly. To appreciate this fact it must be remembered that the cost of analogue to digital converters increases steeply with resolution. On the other hand, if, say, the noise exceeds the maximum wanted signal level by a factor of 3, only one quarter of the acquired signal represents wanted signal. In other words, if the resolution of the analogue to digital converter is 10 bits, only 8 bits are useful. However, the entire signal has to be converted, because the noise can only be eliminated by digital integration of the total signal within the processor. Even then, it is well known that resolution of 8 bits is scarcely adequate for proper data evaluation.

One common analogue method for carrying out data conversion is the phase sensitive detector (PSD), in which, for alternate half revolutions of the shaft, the signal is fed to a smoothing capacitor inverted and non-inverted respectively. Because of its averaging nature, this method rejects random or non-synchronous noise components and signal components which are even harmonics of the rejected components. For most practical balancing machines such filtering suffices.

In its analogue form, the PSD is usually employed in an averaging configuration, wherein instantaneous signal voltages are applied to an averaging capacitor via a suitable resistor. In this circuit, the combination of C and R determines the band width of the filter. In practice the time-constant is made considerably longer than the rotation period to minimise fluctuations in the reading. In the case of slow speed machines, acquisition times may therefore be very long, even if a more sophisticated filter replaces the single C-R combination.

Thus it is an object of this invention to simplify the accurate conversion of data which is to be analysed synchronously with respect to the angular position of a rotating shaft.

Accordingly, the invention provides a method of processing uncorrected data signals in a balancing machine characterised in that it includes the steps of charging an integrating capacitor with a directionally switched current signal proportional to the combined instantaneous data signal and unwanted signal parameters, over an acquisition period comprising a predetermined angular displacement of a workpiece, discharging said capacitor at the end of said acquisition period by using a fixed reference current, and measuring the duration of said discharge to produce a representative data signal.

The invention also provides data signal processing means for a balancing machine for analysing data signals synchronously with the angular position of a rotating shaft in said machine, said processing means including an integrating capacitor adapted to receive said data signals, characterised in that, said capacitor is adapted to be charged by directionally switched currents proportional to the combined instantaneous data signal and unwanted signals generated by said machine and discharged by a fixed reference current over a predetermined angular displacement of a workpiece, the duration of discharge being measured to enable a representative data signal to be produced.

The invention thus stems from the realization that it is possible to build an integrating version of the PSD, in which a current proportional to instantaneous signal amplitude is used to charge an integrating capacitor. Such charge is then a function of signal level, of the integrating time, and of the phase relationship between a reference switching square-wave and of the signal wave form. By integrating the signal over a period which is an integral multiple of the rotational speed, coordinate information is derived far more speedily than by the aforementioned voltage method. As usual, quadrature information can be achieved by using a reference square wave 90° displaced with respect to that mentioned previously.

In a practical embodiment, a processor acquires pulses from a rotary position encoder, and the signal from the unbalance transducer(s) on the balancing machine is suitably conditioned and fed to a switching circuit which inverts the signal wave-form on alternate half waves of a reference square wave which is generated synchronously with the shaft rotation. This reference square wave is an output from the processor or may be separately derived in hardware. The processor also provides input switching signals, and signals gating reference discharge current and reference discharge current polarity. The potential across the integrating capacitor is fed to a comparator, the output of which is input to the processor.

A preferred embodiment of the invention will be described in detail hereinafter, with reference to the accompanying drawings, in which:-

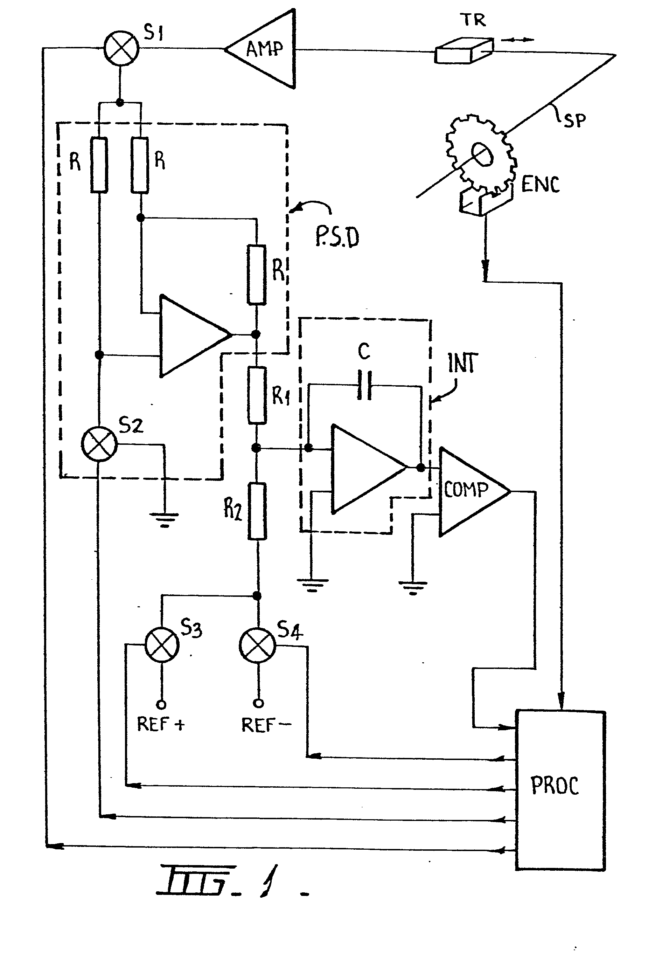

Figure 1 is a schematic block circuit diagram of a signal processing arrangement.

In Figure 1, S1 - S4 are switching circuits. The machine shaft SP is shown schematically as is the rotary position encoder ENC and unbalance transducer(s) TR. Various resistors of the circuitry are marked R.

Initially, the data signal from the transducer TR is amplified by amplifier AMP and is applied to the phase sensitive detector PSD, which is of known design. The detector has a gain of +1 or -1, depending on the state of switching circuit S2. The output from PSD is integrated via resistor R1 into capacitor C, in an integrator stage INT. The output of INT is supplied to comparator COMP, in which it is compared to ground potential. The comparator output is fed to a processor PR which again is of known design.

The switch S1 may be opened to isolate the signal source, and S3 or S4 may be turned on to provide a current to discharge C via R2, using +V reference or -V reference as required.

In the situation where signals from two transducers have to be analysed in respect to two rectangular co-ordinates, four readings are required. These may either be acquired from four PSD circuits simultaneously, or from two or a single PSD circuit(s) sequentially. Such choice is dependent on machine speed. If sequential operation is chosen, the PSD switching wave form may merely be advanced or retarded $90^{o}$ by the processor and the run repeated, in order to acquire data relating to both co-ordinates.

In practical operation, the circuit of Figure 1 may be used in at least the following three ways:-

1) Idle state (zeroing); there is no signal from ENC, and S1 is open. The processor PR repeatedly monitors the output from comparator COMP, and applies a current of opposite direction to capacitor C until the COMP output changes polarity, thus maintaining C at a minimum charge.

2) Error measurement; the shaft SP is rotating, ENC pulses are present, and S1 is open, no data signal being supplied to the PSD. Initially, with S3 and S4 open, and ENC pulses supplied to PR, the processor supplies a reference square wave to S2, which operates the PSD. This situation is maintained for a predetermined number of revolutions of shaft SP, thereby accumulating a charge on C representative of the error and offset signals
present in the signal processing chain.

At the end of the duration of the predetermined number
of revolution(s), the polarity of COMP is registered
by the processor, and S3 or·S4 energised to initiate
discharge, the completion of which is registered by a
change in COMP output.  The processor notes and stores
the discharge duration.

3)  Signal evaluation; the initial conditions are as
stated for 2) except that S1 is closed, and a data
signal is supplied to the PSD.

Signals are processed by the chain of circuit elements,
and are integrated by C for a predetermined integral
number of rotations, over an acquisition period.  At the
end of the period, C is discharged as described previously,
and the discharge duration is noted and stored by the
processor.

Final processing of the data may include multiplication
of the error signal by the ratio of error acquisition
time to data signal acquisition time, and the subtraction
of this weighted error signal from the data signal.  This
obviates the need for offset adjustments.

It can be seen that the method and apparatus of this
invention provides zeroing, error correction and analogue
to digital conversion in one convenient package.  It will
be recognized that routines of 1), 2) and 3) are similar
and that the processor software is accordingly relatively
simple, although the apparatus may have a higher hardware component count than similar arrangements using
software filters.  In other words the present invention
provides a data acquisition system which presents the
processor with potentials which are already representative of the signal and are free of noise.

Claims:

1.  A method of processing uncorrected data signals in a balancing machine characterised in that it includes the steps of charging an integrating capacitor with a directionally switched current signal proportional to the combined instantaneous data signal and unwanted signal parameters, over an acquisition period comprising a predetermined angular displacement of a workpiece, discharging said capacitor at the end of said acquisition period by using a fixed reference current, and measuring the duration of said discharge to produce a representative data signal.

2.  A method according to claim 1 characterised in that said current signal is derived from switching circuitry including a phase sensitive detection system, switching signals for said phase sensitive detection system being derived from machine shaft revolution.

3.  A method according to claim 2 characterised in that said capacitor is maintained at substantially zero charge by application of positive or negative discharge current pulses, said current pulses being determined by software.

4.  A method according to claim 3 characterised in that an error voltage is derived by operating said machine through a particular angular displacement whilst isolating said data signal from said switching circuitry such that no said current signal is supplied to said capacitor, processing an encoder signal during said particular angular displacement to obtain a reference signal and using said reference signal to operate said phase sensitive detection system whereby a charge is accumulated on said capacitor representative of error and offset signals present in the circuitry, said charge causing said error voltage to appear across said capacitor, digitizing said error voltage and applying said digitized signal to correct data readings derived from subsequent signal acquisition tests.

5. A method according to claim 4 characterised in that a single data acquisition channel is used with a change of timing of said switching signals for said phase sensitive detection system.

6. Data signal processing means for a balancing machine for analysing data signals synchronously with the angular position of a rotating shaft in said machine, said processing means including an integrating capacitor adapted to receive said data signals, characterised in that, said capacitor is adapted to be charged by currents proportional to the combined instantaneous data signal and unwanted signals generated by said machine and discharged by a fixed reference current over a predetermined angular displacement of a workpiece, the duration of discharge being measured to enable a representative data signal to be produced.

7. Data signal processing means as defined in claim 6 including switching circuitry for deriving said current, said switching circuitry including a phase sensitive detection circuit, characterised in that, reference switching signals for said phase sensitive detection circuit are derived from revolution of said shaft and either by hardware or software means.

8. Data signal processing means as defined in claim 7 characterised in that further switching circuitry is provided for maintaining said capacitor at about zero charge by switching of positive or negative discharge current pulses to said capacitor, said current pulses being determined by software.

FIG. 1.